# EUROPÄISCHE PATENTANMELDUNG

(11) **EP 1 078 573 A2**
(43) Veröffentlichungstag der Anmeldung: **28.02.2001**
(21) Anmeldenummer: 00126042.1
(22) Anmeldetag: 12.08.1998
(51) Int. Cl.: A21C 9/04

(54) **Verfahren und Vorrichtung zum Garnieren von Pizza**

(30) Priorität: 19.08.1997 IT BZ970044
(62) Teilanmeldung aus: 98945213.1
(71) Anmelder: CARPOS S.A., 6901 Lugano 1 (CH)
(72) Erfinder: Malfatti, Pierluigi, Pergine (TN) (IT); Torghele, Claudio, 38100 Trento (IT)
(74) Vertreter: Oberosler, Ludwig

(57) **Zusammenfassung**

Die Erfindung bezieht sich auf ein Verfahren und die entsprechende Vorrichtung zum mechanisierten und automatisierten Garnieren von Pizzas, Fladen und dergleichen gemäß individueller Einzelbestellung, wobei die Garnierzutaten dosiert über dem Fladen (16a) durch eine Streuvorrichtung (10) verstreut werden oder ohne Streuvorrichtung abgelegt werden. Die Garnierzutaten sind als Einzelportionen (18a, 8b) in Schalenstapeln (18d) oder in Blasenbändern (8a) luftdicht verpackt und werden durch spezifische Vorrichtungen (9, 8) aus einem eventuell gekühlten Lagerbehälter entnommen und entleert. Die einzelnen Schalen (18) welche die Schalenstapel bilden können mit einem Streugitter versehen sein und/oder eine Zellenunterteilung aufweisen wodurch beim Entleeren der Schalen die Garnierzutaten in verstreuter Anordnung auf den Fladen fallen.

## Beschreibung

Die Erfindung bezieht sich auf ein Verfahren und die entsprechende Vorrichtung zum mechanisierten und automatisierten Garnieren von Pizzas, Fladen und dergleichen, infolge individueller Einzelbestellung.

Es sind Verfahren und Vorrichtungen für das automatisierte industrielle serienmäßige Garnieren von Pizzas und Fladen bekannt. Die Vorrichtungen zur Durchführung dieser Verfahrens sind sperrig und nehmen viel Platz in Anspruch; die zu garnierenden Fladen werden dabei über ein Förderband unter mindestens einem Streumechanismus für die Garnierzutaten im Durchlauf oder während einer Anhaltezeit garniert. Bei diesem Verfahren erfolgt das Garnieren und/oder Farcieren meistens an einer Mindestzahl von Pizzas gleicher Art, während des Durchlaufes der Pizzas welche in kleinem Abstand zueinander auf dem Förderband liegen, dabei kommt es kaum zu einer gezielten Verstreuung der Garnierprodukte was zu Mehraufwand an Garnierzutaten, an Wartung und für die Wahrung der Hygiene und Sauberhaltung der Anlage führt.

Die technischen Merkmale dieser bekannten Vorrichtungen ermöglichen es nicht Pizzas in Einzelfertigung, gemäß individueller Einzelbestellung, infolge Auswahl aus einer Liste, zu garnieren.

Die Erfindung stellt sich die Aufgabe ein Verfahren und die entsprechende Vorrichtung für das mechanische und automatisierte Garnieren von, infolge individueller Auswahl aus einer Liste, einzeln bestellten Pizzas oder dergleichen zu schaffen welche einzeln gewürzt, garniert, bzw. farciert, werden. Weiters ist es Aufgabe der Erfindung das Verfahren und die Vorrichtung so zu gestalten, daß der Produktionsablauf hygienisch und ohne menschlichen Eingriff erfolgt und daß, zwecks Wartung der Anlage und insbesondere bezogen auf die Hygiene und auf die Sauberhaltung der Anlage, periodisch jene Teile welche mit den Nahrungsmitteln in Berührung kommen, auf einfache Weise austauschbar sind. Weiters soll erfindungsgemäß die Vorrichtung für die verderblichen Garnierkomponenten der Pizza und für das entleerte Verpackungsmaterial eine nahrungsmittelgerechte Lagerhaltung ermöglichen.

Zur Lösung dieser Aufgabe schlägt die Erfindung eine Dosier- und Streuvorrichtung vor welche die als einzelne Portionen verpackten Garnierzutaten über dem Fladen entleert und eventuell verstreut. Dabei können die vorzugsweise in kontrollierter Atmosphäre, luftdicht verpackten Garnierzutaten in Stapelform innerhalb einem gekühlten Magazin verwahrt werden und auch die entleerten Schalen in einem gekühlten Behälter abgelegt werden oder die Garnierzutaten können als Portionen verpackt in Form eines Blasenbandes, zwischen Kunststoff-Folien eingeschweißt ebenfalls aus einem gekühlten Magazin zugeführt werden und über dem Fladen entleert werden; auch diese Verpackungsart ermöglicht eventuell eine Verpackung in kontrollierter Atmosphäre.

Zum Beispiel an einer Vorrichtung für die Herstellung von Pizza durchläuft der Fladen, nach der Dosierstation für das Tomatenmark, die Saucen oder das Püree, auf einem Transportmittel, zum Beispiel auf einem Förderband oder einer Transportplatte, eine oder mehrere Dosierstationen welcher gleicher oder auch unterschiedlicher Art sein können um auf dem Fladen die Garnierzutaten und oder Gewürze zu verstreuen. Die Schalen in welchen erfindungsgemäß die Garnierzutaten verpackt sind und welche untereinander vereint einen Stapel bilden, sind so geformt und gestapelt, daß jeweils die obere Schale mit ihrem Boden den Deckel der unteren Schale bildet um diese möglichst luftdicht zu verschließen. Die Blasenbänder hingegen in welchen die Garnierportionen einzeln verpackt sind können als Bandrolle oder Bandserpentine in Behältern verpackt sein.

Das erfindungsgemäße Verpackungssystem ermöglicht, sei es in Schalenstapeln als auch in Blasenbändern, eine hygienische, nahrungsmittelfreundliche Verpackung, eine genaue Positionierung der Garnierzutaten auf dem Fladen, eine einfache, kompakte Lagerung innerhalb eines gekühlten Behälters und eine gezielte verschwendungsfreie Verstreuung des Schaleninhaltes, bzw. Blaseninhaltes, auf der Fladenoberfläche. In der Regel ist jede Dosiervorrichtung für die Garnierzutaten mit einer darunter angebrachten erfindungsgemäßen Streuvorrichtung kombiniert.

Die erfindungsgemäße Dosiervorrichtung für in Schalenstapeln verpackten Garnierzutaten sieht vor, daß diese Stapel zum Beispiel von oben oder seitlich in gekühlte Magazine eingeführt werden und von unten durch Vorbeibewegen eines Schiebers entnommen werden, in eine Kippstation zur Entleerung gebracht werden und als leere Schalen abgelegt werden. Die erfindungsgemäße Dosiervorrichtung für, in Blasenbändern verpackten Garnierzutaten verfügt über eine mechanische Rollvorrichtung welche das Blasenband mit den eingeschweißten Portionen aus der gekühlten Lagerbox zieht und über dem Streumechanismus die beiden verschweißten Folien des Blasenbandes außeinanderzieht wodurch die Garnierzutaten auf die darunter vorgesehene Streuvorrichtung fallen. Unterhalb der Kipp- und Entleerungsstation für die Schalen, bzw. unterhalb der Entleerungsstation für die Blasenbänder, kann eine erfindungsgemäße Streuvorrichtung vorgesehen sein. Die Garnierzutaten (fein geschnittener Schmelzkäse, Schinkenstücke, Gemüsestücke, usw.) fallen auf die Streuvorrichtung um von dieser durch ein Sieb und/oder ein Gitter auf dem darunterliegenden Fladen durch Vibration verstreut zu werden. Die Siebe und/oder Gitter sind austauschbar und aus spülmaschinenechtem Material oder aus Materialien welche eine Einwegbenützung vorsehen; diese erfindungsgemäße Ausrüstung ermöglicht es durch den periodischen Siebwechsel auf einfache Weise die Hygiene zu wahren.

Es ist die Möglichkeit gegeben daß die Garnierzutaten auch ohne Streuvorrichtung, in gehäufter Form, auf dem Fladen abgelegt werden. Weiters ist zu bemerken, daß je nach Bestellung (nach individuellem Wunsch) auf dem selben Fladen nur bestimmte Garnierzutaten aufgebracht werden sollen, bzw. daß von den selben Garnierzutaten die doppelte oder dreifache Menge aufgebracht werden soll; im letzten Fall wird der Fladen unter der selben Dosierstation verweilen bis die entsprechende Menge an Garnierzutaten, bestehend aus mehr als einer Portion darauf entleert und verstreut worden ist. Insbesondere das Dosiersystem mit in Schalen verpackten Garnierzutaten bietet sich an, mehrere Magazine oder auch ein einziges Magazin für Schalenstapel mit unterschiedlichen Garnierzutaten vorzusehen, welche über den selben Schieber entnommen werden können und alle an der selben Fertigungsstation auf dem Fladen verstreut werden können. Weiters sieht die Erfindung vor, daß die Schalen in Zellen unterteilt sind und eventuell zusätzlich mit einem Rost oder Gitter versehen sind, auf diese Weise kann, durch den entsprechenden Durchmesser der Schale und die Anordnung des Produktes in Zellen, bereits eine gleichmäßige Verteilung auf dem Fladen erreicht werden. Bei Schalen mit Rost oder Gitter hingegen kann der Inhalt durch Vibrieren der geöffneten und eventuell gekippten Schalen verstreut werden.

Das erfindungsgemäße Verfahren sieht vor daß, zwecks Wahrung der Hygiene, ein Austauschzyklus vorgegeben ist, welcher den Austausch der Gitter und/oder Siebe der Streuvorrichtungen nach einer bestimmten Anzahl von Streuvorgängen, eventuell in Abhängigkeit der Verderblichkeit der Garnierzutaten, der Temperatur und der Zeitintervalle zwischen den einzelnen Streuvorgängen, vorgibt.

Die Erfindung wird anschließend anhand von zwei in den beiliegnden Zeichnungen schematisch dargestellten, vorzuziehenden Ausführungsbeispielen von, nach dem erfindungsgemäßen Verfahren arbeitenden Vorrichtungen zum Garnieren von Pizzas oder dergleichen näher erklärt; dabei erfüllen die Zeichnungen rein erklärenden und nicht begrenzenden Zweck.
Die Fig. 1 zeigt eine erfindungsgemäße Vorrichtung zum Garnieren von Pizzas mittels in erfindungsgemäßen Schalenstapeln verpackten Garnierzutaten, ohne darunter angebrachter Streuvorrichtung und ohne gekühlte Magazine für die Schalenstapel und für die entleerten Schalen.
Die Fig. 2 zeigt eine erfindungsgemäße Streuvorrichtung für Garnierzutaten unter einer, in Fig. 1 dargestellten, erfindungsgemäßen Dosiervorrichtung zum Garniern von Pizza.
Die Fig. 3 zeigt eine erfindungsgemäße Dosiervorrichtung für die in Blasenbändern verpackten Garnierzutaten mit einer darunter angebrachten erfindungsgemäßen Streuvorrichtung

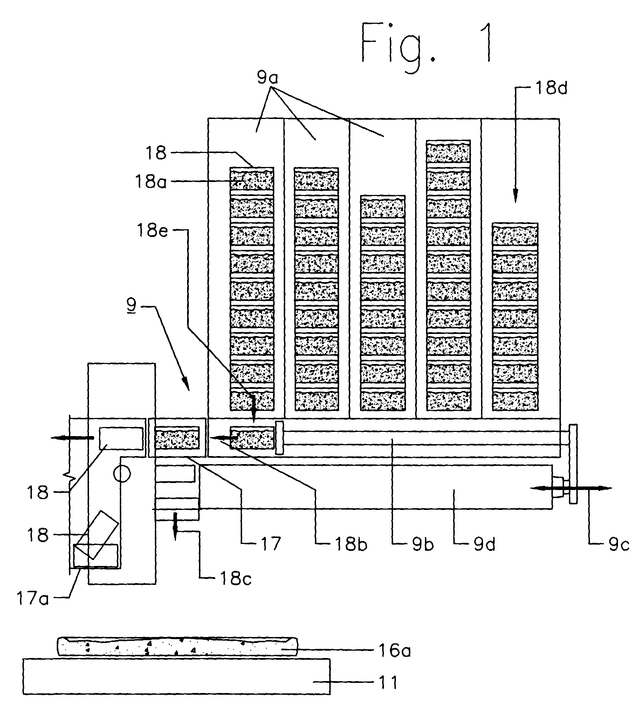

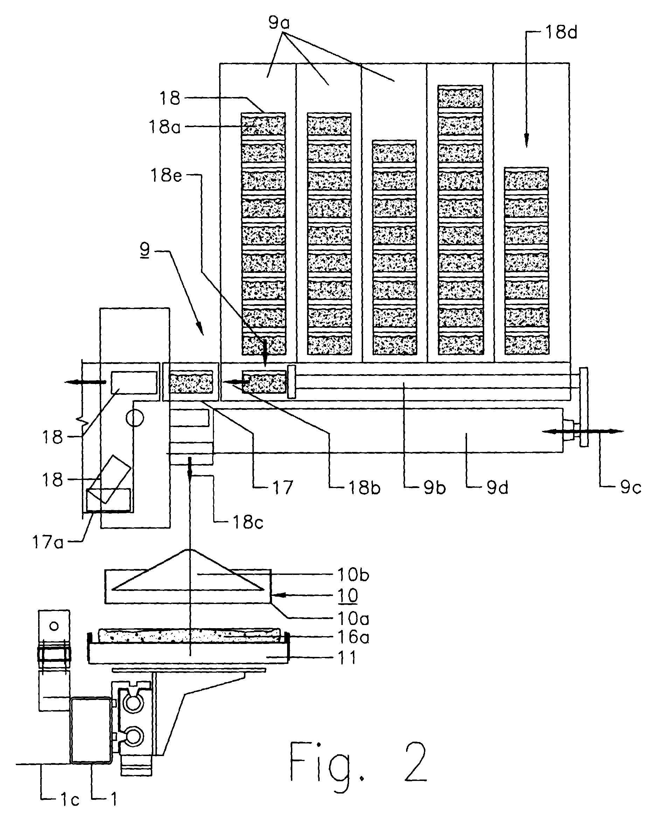

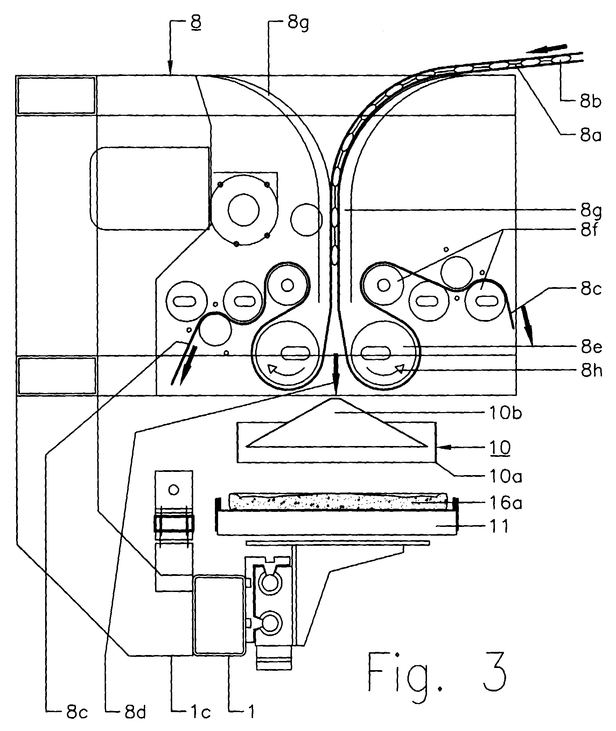

Die erfindungsgemäßen Vorrichtungen zum Garnieren von Pizzas nach dem erfindungsgemäßen Verfahren können nur aus einer Dosierstation 9 oder 8 gemäß den Fig. 1 oder Fig. 3 bestehen, mit oder ohne darunter angeordneten Streuvorrichtung 10 gemäß Fig. 2 und 3.

Das erfindungsgemäße Verfahren sieht vor, daß die Garnierzutaten absolut hygienisch und den Lebensmittelverordnungen gemäß, gelagert und verarbeitet werden. Um dies zu erreichen schlägt die Erfindung eine Dosiervorrichtung 9 (Fig. 1 und 2) oder 8 (Fig. 3) vor; für die Dosiervorrichtung 9 sind die Garnierzutaten 18a in Kunststoffschalen 18 abgepackt wobei Schalenstapel gebildet werden und jeweils der Deckel der Schale durch den dicht eingesetzten Boden der folgenden Schale gebildet wird, während für die Dosiervorrichtung 8 die Garnierzutaten als Blasenbänder 8a mit eingeschweißten Portionen 8b zugeführt werden. Nach einer erfindungsgemäßen Weiterentwicklung können die einzelnen Schalen die erforderliche Größe und eventuell runde Form haben und Zellen aufweisen um durch Kippen den Inhalt regelmäßig verteilt auf dem Fladen 16a abzulegen; diese Vorrichtung ist auch für eher flüssige Garnierzutaten wie Tomatenmark, Saucen, und Pürees nutzbar. Gemäß einer weiteren Ausführungsform der Schalen können diese mit einem Rost oder Sieb versehen sein um durch Vibrieren der Schale selbst, die Verteilung der Garnierzutaten zu erreichen. In beiden vorgenannten Fällen erübrigt sich also eine spezifische Streuvorrichtung 10 und somit auch der periodische Austausch der Roste oder Siebe 10b.

Die erfindungsgemäße Dosiervorrichtung 9 welche mit Schalenstapeln 18d gespeist wird sieht vor daß diese Stapel 18d, nach Abnahme einer eventuell in kontrollierter Atmosphäre versiegelten Verpackung, in gekühlten Lagerbehältern 9a gelagert sind aus denen sie durch einen Schieber 9b welcher über einen Kolben 9d bewegt 9c wird entnommen und zu einer Kippentleerungsstation 17 geschoben 18b werden wo der Inhalt entleert wird und nach unten fällt 18c während die leere Schale 18 (Einwegschale oder wiederverwendbare Schale) in einen Ablagebehälter 17a für das Leergut weitergeschoben wird.

Natürlich kann auch in diesem Fall unter der Entleerungsstation 17 und über dem Fladen 16a eine erfindungsgemäße Streuvorrichtung 10 vorgesehen sein. Die erfindungsgemäße Streuvorrichtung besteht aus einem vibrierenden Halter 10a in welchen ein Gitter und/oder ein Sieb 10b leicht austauschbar eingesetzt werden kann ; diese Einsätze 10b können unterschiedliche Form haben, sie sind auf die Stückgröße der Garnierzutaten und auf den Fladendurchmesser abgestimmt und können, um die Hygiene zu wahren, im Einwegverfahren oder Mehrwegverfahren ausgetauscht werden.
Die erfindungsgemäße Dosiervorrichtung 8 (Fig. 3) welche mit Blasenbändern 8a gespeist wird die aus einem gekühlten Lagerbehälter abgerollt werden, besteht aus einem einseitigen oder beidseitigen Einlauf 8g über welchen das Blasenband 8a mit den eingeschweißten Portionen 8b von zwei Rollmechanismen eingezogen wird und zwar so, daß jeder der Rollmechanismen 8f eine der Folien 8c welche das Band 8a bilden über entsprechende Rollen 8e so auseinanderzieht 8h, daß der Inhalt 8b der Blasen nach unten 8d entleert wird und entweder direkt auf den Fladen 16a fällt oder von einer darunter angebrachten erfindungsgemäßen Streuvorrichtung 10 auf dem Fladen 16a verteilt wird.

Erfindungsgemäß kann auch die Ladevorrichtung 3 und die Dosier- und Wiegevorrichtung 4 durch eine erfindungsgemäße Dosiervorrichtung 9 oder 8 (ohne Streuvorrichtung 10) ersetzt werden. In diesem Fall ist es möglich für die Teigherstellung über exakt vordosierte Mehlgemische und Zutaten zu verfügen; zusätzlich kann dadurch der Feuchtigkeitsgehalt der Teigkomponenten, unabhängig von der Luftfeuchtigkeit, konstant gehalten werden.

Je nach Bestellung (nach individuellem Wunsch) kann auf einem Fladen 16a von bestimmten Garnierzutaten auch die mehrfache Menge aufgebracht werden oder es können auch mehrere Dosierstationen 9 oder 8 übergangen werden.

Die Dosierstation 9 welche mit Schalenstapeln 18d gespeist wird ist dazu geeignet, daß z.B. mehrere Schalenstapel 18d mit unterschiedlichem Inhalt 18a vorgesehen sind und daß der Fladen 16a unter einer einzigen dieser Dosierstationen 9 mit mehreren unterschiedlichen Garnierzutaten belegt wird. In diesem Fall ist es erforderlich daß für die einzelnen Schalenstapel 18d Vorschubelemente vorgesehen sind welche den jeweiligen Stapel mit den gewünschten Zutaten mit der untersten Schale in den Arbeitsbereich des Schiebers 9b bringt oder fallen 18e läßt. Diese Lösung ermöglicht es die gesamte Anlage kompakter zu bauen und die Durchlaufbewegung 11a des Fladens 16a sowie die Zeiten weiter zu verkürzen.

## Patentansprüche

1. Verfahren zum Garnieren von Pizzas und dergleichen wobei die Garnierzutaten dosiert und über dem Fladen verstreut werden, dadurch gekennzeichnet, daß die Garnierzutaten und Gewürze in kontrollierter Atmosphäre, in Form von zu Schalenstapeln (18d) oder in Blasenbändern (8a) vereinten Einheitsportionen (18a; 8b) in gekühlten Lagerbehältern vorliegen aus welchen sie jeweils unmittelbar vor Verwendung entnommen werden und daß auch die Teigkomponenten als Gemisch oder in Form von Teilgemischen in derartigen Verpackungen auf Lager gehalten werden und bei Bedarf einzeln über der Teigknet- und Fließpreßstation entleert werden.

2. Verfahren zum Garnieren von Pizza und dergleichen gemäß Patentanspruch 1, dadurch gekennzeichnet, daß die Garnierzutaten, eventuell auch flüssiger Konsistenz, in Schalen (18) mit Zellenunterteilung enthalten sind und die gleichmäßige Verteilung auf der Fladenoberfläche durch Kippen der Schale (18), durch den entsprechenden Schalendurchmesser, ohne Streuvorrichtung (10) und ohne Verteilung durch Luftstrahle, erfolgt.

3. Verfahren zum Garnieren von Pizza und dergleichen gemäß Patentanspruch 1, dadurch gekennzeichnet, daß die Schalen (18) selbst für die Garnierzutaten (18a) mit einem Rost oder Sieb ausgestattet sind und durch Vibration in Kippstellung entleert werden wobei der Inhalt auf die Fladenoberfläche verstreut wird.

4. Vorrichtung zum Garnieren von Pizza und dergleichen gemäß dem in Patentanspruch 1 dargelegten Verfahren in welcher die Dosierung von Garnierzutaten und/oder auch von portionierten Mengen oder Teilmengen der Komponenten für die Teigherstellung gemäß Patentanspruch 1 erfolgt, dadurch gekennzeichnet, daß die portionierten Mengen (18a) in Schalen (18) enthalten sind welche zu Stapeln (18d) vereint sind wobei der jeweilige Boden der folgenden Schale den Deckel der vorhergehenden bildet, daß diese Stapel (18d) in kontrollierter Atmosphäre verpackt sein können und, von dieser Verpackung befreit, in gekühlte Lademagazine (9a) eingeführt werden aus welchen sie von einem durch Zylinder (9d) bewegten (9c) Schieber (9b) entnommen werden, einer Kippentleerstation (17) zugeführt werden und durch das Nachschieben (18b) einer nächsten Schale (18) in einen Behälter (17a) für das Leergut befördert werden, daß die selbe Dosiervorrichtung (9) mehrere Lademagazine (9a) für mehrere Schalenstapel (18d) mit unterschiedlichem Inhalt aufweist und daß in diesem Fall ein Kolben jeweils die unterste Schale jenes Schalenstapels (18d) in den Aktionsbereich des Schiebers (9b) schiebt (18e) welche diese der Kippentleerstation (17) zuführt.

5. Vorrichtung zum Garnieren von Pizza und dergleichen gemäß dem in Patentanspruch 1 dargelegten Verfahren in welcher die Dosierung von Garnierzutaten und/oder auch von portionierten Mengen oder Teilmengen der Komponenten für die Teigherstellung gemäß Patentanspruch 1 erfolgt, dadurch gekennzeichnet, daß die Portionierten Mengen (8b) innerhalb Blasen, zwischen zwei verschweißten Folien (8c), welche ein Blasenband (8a) bilden, eventuell in kontrollierter Atmosphäre enthalten sind, daß dieses Blasenband (8a) über einen Einlauf (8g) durch zwei Rollmechanismen (8f) aus einem vorzugsweise gekühlten Behälter entnommen wird indem die beiden, das Blasenband (8a) bildenden, Folienstreifen (8c) getrennt die Rollmechanismen (8f) durchlaufen und über, sich entgegengesetzt drehende (8h), Umlenkrollen (8c) laufen wobei die Blasen geöffnet und der Inhalt frei nach unten fällt (8d).

6. Vorrichtung zum Garnieren von Pizza und dergleichen gemäß dem im Patentanspruch 1 dargelegten Verfahren, dadurch gekennzeichnet, daß bei Bedarf unterhalb der Dosiervorrichtungen (8, 9) für die Garnierzutaten, bzw. für die Komponenten zur Teigherstellung, eine Streuvorrichtung (10) vorgesehen ist welche aus einem vibrierenden Halter (10a) besteht in welchen verschiedenartige Gitter- und oder Siebeinsätze (10b) eingelegt und auf einfache Weise im Einweg oder im Mehrwegverfahren austauschbar sind.
